# EUROPEAN PATENT SPECIFICATION

(11) **EP 3 393 273 B1**
(45) Date of publication and mention of the grant of the patent: **26.11.2025**
(21) Application number: 16825420.9
(22) Date of filing: 22.12.2016
(51) Int. Cl.: A23L 29/25, A23L 29/30, A23L 27/22, A23L 27/23, A23L 29/244, A23L 29/269, A23L 23/10, A23L 27/00

(54) **FOOD CONCENTRATE IN FORM OF A RE-HEALED GEL COMPRISING XANTHAN AND SECOND GELLING AGENT SELECTED FROM GALACTO- AND/OR GLUCOMANNANS WHICH HAS BEEN OBTAINED BY SHEARING AND RE-SOLIDIFICATION**
LEBENSMITTELKONZENTRAT IN FORM EINES WIEDERERHÄRTETEN GELS, DAS XANTHAN UND EIN ZWEITES GELIERMITTEL, AUSGEWÄHLT AUS GALACTO- UND/ODER GLUCOMANNANEN, ENTHÄLT UND DURCH SCHEREN UND WIEDERERHÄRTEN ERHALTEN WURDE
CONCENTRÉ ALIMENTAIRE SOUS FORME D'UN GEL REFERMÉ COMPRENANT DU XANTHANE ET UN SECOND GÉLIFIANT CHOISI PARMI LES GALACTO- ET/OU GLUCOMANNANES, QUI A ÉTÉ OBTENU PAR CISAILLEMENT ET RESOLIDIFICATION

(30) Priority: 23.12.2015 WO PCT/EP2015/202282
(43) Date of publication of application: 31.10.2018
(73) Proprietor: Unilever IP Holdings B.V., 6708 WH Wageningen (NL)
(72) Inventor: SAILER, Winfried, 74074 Heilbronn (DE); SCHÄNZEL, Monika, Renate, 74074 Heilbronn (DE)
(74) Representative: Tjon, Hon Kong Guno
(86) International application number: PCT/EP2016/082343
(87) International publication number: WO 2017/109051

(56) References cited:
- EP-A1- 1 962 619
- CA-C- 1 334 321
- JP-A- 2009 278 968
- US-A1- 2013 280 405
- COPETTI G ET AL: "Synergistic gelation of xanthan gum with locust bean gum: a rheological investigation", GLYCOCONJUGATE JOURNAL, CHAPMAN & HALL, BOSTON, vol. 14, 31 December 1997 (1997-12-31), pages 951 - 961, XP003015689, ISSN: 0282-0080, DOI: 10.1023/A:1018523029030

## Description

The present invention relates to food concentrates in the form of a solid gel.

Food concentrates are usually defined as food products that need to be diluted with water or into a dish before consumption. Perhaps one of the most iconic savoury food concentrate is the bouillon cube. It is a dry product prepared by pressing dry ingredients or extruding a mixture of dry ingredients and fat. WO0868138 discloses a bouillon cube with 49.4 wt% salt, 11.9 wt% monosodium glutamate, 12 wt% vegetable hydrogenated fat, 2.4 wt% sugar, 13.7 wt% starch, spices and herbs. Yeast extract is often included and depending on the desired flavour, beef extract, chicken meat powder and the appropriate aromas. To prepare a bouillon, a bouillon cube is usually diluted with hot water in a ratio of 1 to 50. To season a dish with vegetables and/or meat, a bouillon cube is often diluted into the dish during the preparation where it dissolves into the aqueous phase of the dish.

Recently, gelled savoury concentrates have been developed as an alternative to the dry bouillon cube. EP1962619 discloses a gelled food concentrates which can be used like bouillon cubes as described above. The advantage compared to dry bouillon cubes is that the food concentrate in the form of a gel allows the inclusion of e.g. fresh herbs with better taste and flavour. Gelled food concentrates like those in EP1 962 619 have been a remarkable commercial success. In particular, for use in preparing dishes with pieces of meat and/or vegetables, where some consumers appreciate the coating effect. Still there is a need for improved gelled food concentrates. In particular, some consumers have requested gelled concentrates that should be easier to portion while others seek improved coating of vegetables and/or meat after dilution without sacrificing ease of portioning.

US 2013/0280405A1 discloses a semi-solid food concentrate in the form of a gel or a paste comprising a salt-sensitive gum and a salt-stable structuring material.

Surprisingly, an improved food concentrate in the form of a solid re-healed gel can be obtained comprising
a) 45 to 70 wt% of water by weight of the total concentrate;
b) a combination of at least two gelling agents in an amount to form a gel, the first gelling agent being xanthan and the second gelling agent selected from a galactomannan and/or glucomannan, in amount of from 0.8 to 5 wt%, most preferred from 1 to 2.5 wt % based on the weight of the total water of the concentrate;
c) a combined sodium and potassium content of at least 70 mmol per 100 g and preferably at most 800 mmol per 100g of concentrate;
d) 0 to 5 wt% of non-gelatinised starch by weight of the total concentrate;
e) An effective amount of savoury taste booster ingredients selected from the group consisting of glutamate, 5'-ribonucleotides, sucrose, glucose, fructose, lactic acid, citric acid and mixtures thereof, preferably in an amount of 0.5 to 30 wt% by weight of the total concentrate, and
whereby the concentrate has been sheared to form a solid re-healed gel said re-healed gel being defined as a continuous gel at 20°C having a weight of at least 1g, preferably at least 10g, said solid re-healed gel having at most 90%, preferably at most 80%, preferably at most 70%, preferably at most 60%, and preferably at least 5%, more preferably at least 10% of the gel strength of a quiescently formed gel of the same composition, whereby said gel strength measurements are performed after at least 4 days of storage at 20°C, whereby the gel strength is measured as set forth in the description.

The invention also provide a process to prepare a concentrate as described herein comprising the steps of
a) Admixing ingredients to water to form a homogeneous mixture;
b) Heating said mixture under agitation to above the gel setting point, preferably above 80°C;
   optionally pasteurising the mixture;
c) A first gel formation phase comprising
   i) Cooling said mixture to below the gel setting point; and
   ii) Applying shear during the cooling phase below the gel setting point through a temperature range of at least 10°C, preferably at least 15°C, more preferably at least 20°C;
d) Filling containers with sheared and cooled mixture and sealing the containers;
e) allowing the sheared and cooled mixture to form a solid re-healed gel during a second gel formation phase under quiescent conditions, preferably below 30°C;
whereby the shear applied during the first gel formation phase is such that during the second gel formation phase the mixture is capable of re-healing to form a solid re-healed gel according to any one of the preceding claims.

Unexpectedly, the present invention allows providing gelled concentrates with increased coating effect of the diluted concentrates while improving the ease of portioning.

The present invention is surprising because it has been known to apply shear in a way to achieve the opposite: a slurry of discontinuous microscopic gel particles ("micro-gels") where the individual gel particles can no longer re-heal to form a continuous gel. These liquid slurries have been developed to replace fat in margarine like-spreads and mayonnaise-like dressings as disclosed in e.g. EP 432 835 A1, EP 558 113 A1, EP 356 094 and EP 355 908 A1. These non-aggregated microscopic gel particles are described to have a diameter in the range of 0.1 to 30 microns viewable at a magnification 800. These micro-gels of the prior art have been created by applying very high shear using votators or Ultraturrax homogenisers during the cooling phase. The process is designed to create the pourable liquids of micro-gel particles of generally less than 10 micrometer that can no longer re-heal to form a continuous gel. EP 355 908 A1 discloses that the liquid micro-gel products are stable in their mobile state for 6 months and do not re-heal to form a continuous gel. If the liquid micro gel slurries are heated to 95°C and cooled under quiescent conditions they form rigid gels and are indistinguishable to the same product cooled under quiescent conditions only. EP 432 835A1 discloses that fluid micro-gels remain stable liquids of micro gel particles even after pasteurisation. EP 558 113 A1 uses the liquid slurries of micro-gels of the latter to prepare low-fat emulsions like mayonnaise type dressings. The cited art does not include the combination of the application of an amount of shear during a first gel formation phase on the one hand with a second gel formation phase on the other hand whereby the shear applied is such that the sheared gel re-heals under quiescent conditions to form a solid re-healed gel without additional reheating as disclosed to melt the micro-gels. The present invention is not fluid but a solid gel of macroscopic dimensions: usually sold as single piece of gel of about 25g in a tub with the longest dimension measuring several cm across. The solid re-healed gel of the invention can be surprisingly easy portioned by the consumer by taking e.g., only half of the gel from the tub compared to concentrates with the same amount of gelling agent. In addition, it also provides gelled concentrates with improved coating effect without sacrificing ease of portioning.

### Detailed description of the invention

### Definitions

The term "food concentrate" is understood to refer to a composition that is formulated to be consumed after a desired dilution with an aqueous phase under application of heat. The food concentrate may also be referred to as "concentrate" herein. The concentrate may be used to prepare a bouillon, a soup, a sauce, by e.g. dilution with hot water preferably under application of heat. The present concentrate may also be added to a dish where the concentrated is diluted into a volume of food to prepare a dish like a stew, a stir-fry, a vegetable dish, meat dish. In the latter case the concentrate is mainly diluted into the aqueous phase of the dish. If it is intended to prepare a dish the concentrate is usually portioned for 2-4 servings of the dish.

It could be argued that a concentrate similar a bouillon cube dissolves and disperses rather than "dilutes" when used. However, the term "dilution" is used to underline that in the context of concentrates the dilution is necessary to bring the high amounts of ingredients in the concentrate - notably salt - to a consumable level. Therefore, the term dilution is understood to include the aspects of dissolving and dispersing of the concentrate. In Western-European countries a ready-to-eat bouillon typically contains about 0.8wt% salt. The dilution ratio (w/w) of the inventive concentrate is preferably at least 1:5, preferably at least 1:8 and preferably at most 1:50, more preferably at most 1:25. For example a concentrate of 24g diluted with 500ml of aqueous phase corresponds to a dilution ratio of 20.8.

The term "re-healed gel" is defined as a continuous gel at 20°C preferably having a weight of at least 1g, preferably at least 10g, more preferably at least 15g, even more preferably at least 20g,said solid re-healed gel having at most 90%, preferably at most 80%, preferably at most 70%, more preferably at most 60%, and preferably at least 5%, more preferably at least 10% of the gel strength of a quiescently formed gel of the same composition. The term continuous in this context is meant to exclude compositions of micro-gel particles where the gel phase is discontinuous and enables such compositions to be liquid or spreadable.

A quiescently formed gel or "Q-gel" is understood to mean a gel which after the heating phase is allowed to form a gel under quiescent conditions like conventional gel products.

The concentrate according to the invention is solid shape stable product and not a spreadable dispersion of gelled particles like micro-gels. The inventive composition is not a paste. A paste for the purpose of the present invention - using the measurement protocol described below - has a linear force increase without breaking point, whereby the maximum force is the same as end-point of measurement.

The term "shape stable" is meant to describe that the concentrate substantially retains its shape when removed from the packaging for one minute, preferably for two minutes. Fluid, liquid, paste and pourable products are not considered to be shape stable for the purpose of the present invention. The concentrate according to the invention is usually a shelf stable product, this is meant to describe a product that is safe for human consumption from a microbiological point of view after 6 months of storage at 20°C after production.

The concentrate according to the invention preferable has a gel strength of at least 5g, preferably at least 10g, more preferably at least 15 g and preferably at most 500g, preferably at most 300g, most preferably at most 200g measured as described herein.

The term "gel setting point" for the present purpose is defined as the temperature at which, upon slowly cooling down, an ordered structure is formed. The gel setting point for a composition according to the invention can be determined by heating the composition to above the transition point, splitting it up in a number of samples which are subsequently equilibrated under quiescent conditions at different temperatures lying 1 centigrade apart, and dropping a steel ball of about 1 mm diameter from a height of 5 cm on each of the samples after equilibration. If the samples are ordered in accordance with the temperature at which the samples were equilibrated, starting from the sample equilibrated at the highest temperature, the gel setting temperature is the equilibration temperature of the first sample through which the steel ball did not sink.

The gel strength for purpose of the present invention is measured using the following protocol. Preferably the measurement is carried out using a Texture Analyser TA - XT2 plus (Stable Micro Systems Ltd) with a finger probe of 12.7mm diameter. The measurement is normally carried out with the sample in the tubs it is usually sold in. The tubs have a volume of at least 20ml with the following inner dimensions: a tub height at least 20mm, a smallest wall to wall to distance at least 20mm. One example of such a tub is made from polypropylene/EVOH/polypropylene of about 700 microns total thickness. The finger probe penetrates the sample 12,5mm in depth. The gel strength corresponds to the force needed at breaking point of the gel or maximum force if no breaking point is reached in the given penetration distance.

### Measuring Program:

| | |
|---|---|
| *Measuring tool:* | Cylindrical finger probe (12,7mm diameter) |
| *Mode:* | Measure Force in Compression |
| *Option:* | Return to Start |
| *Pre - Test Speed:* | 1,0 mm/s |
| *Test Speed:* | 3 mm/s |
| *Post - Test Speed:* | 10 mm/s |
| *Distance:* | 12,5 mm |
| *Trigger Type:* | 2 g |

The measurements are performed after at least 4 days of storage at 20°C. The gel strength of the re-healed gel is compared to quiescently formed gel of the same composition (=100%)
The concentrate according to the invention preferably has a weight of at least 1g, more preferably at least 5g, even more preferably at least 10g, even more preferably at least 20g. It is typically sold in tubs holding e.g. 15g, 24g or 28g. Because the present invention has an improved ease in portioning, one advantage is providing multi-portion packages of at least 100g, preferably at least 250g and preferably at most 5kg, preferably at most 1 kg.

A food concentrate in the form of a solid re-healed gel according to the present invention comprises
a) 45 to 70 wt% of water by weight of the total concentrate;
b) a combination of at least two gelling agents in an amount to form a gel, the first gelling agent being xanthan and the second gelling agent selected from a galactomannan and/or glucomannan in amount of from 0.8 to 5 wt%, most preferred from 1 to 2.5 wt % based on the weight of the total water of the concentrate
c) a combined sodium and potassium content of at least 70 mmol per 100 g and preferably at most 800 mmol per 100g of concentrate;
d) 0 to 5 wt% of non-gelatinised starch by weight of the total concentrate;
e) An effective amount of savoury taste booster ingredients selected from the group consisting of glutamate, 5'-ribonucleotides, sucrose, glucose, fructose, lactic acid, citric acid and mixtures thereof, preferably in an amount of 0.5 to 30 wt% by weight of the total concentrate, and
whereby the concentrate has been sheared to form a solid re-healed gel said re-healed gel being defined as a continuous gel at 20°C having a weight of at least 1g, preferably at least 10g, said solid re-healed gel having at most 90%, preferably at most 80%, preferably at most 70%, preferably at most 60%, and preferably at least 5%, more preferably at least 10% of the gel strength of a quiescently formed gel of the same composition, whereby said gel strength neasurements are performed after at least 4 days of storage at 20°C, whereby the gel strength is measured as set forth in the description.

Preferably, the concentrate has been sheared during the cooling phase below the gel setting point through a temperature range of at least 10°C, preferably at least 15°C, more preferably at least 20°C. For the avoidance of doubt the phrase "through a temperature range of at least 10°C" is meant to describe that shear has been applied over a temperature range spanning at least 10°C e.g. from 60°C to at least 50°C

Preferably, the concentrate has been sheared in the range from 80°C to 40°C, more preferably in the temperature range from 60°C to 40°C.

### Ingredients

### Water

The concentrate according to the invention comprises 45 to 70wt% of water by weight of the total concentrate. Water may be added as such or as part of another ingredient. For example, if fresh herbs are used these may contain up to 95% of water.

Therefore, these amounts refer to the total amount of water present in the concentrate.

### Gelling agents

The concentrate according to the invention comprises a combination of at least two gelling agents in an amount to form a gel, the first gelling agent being xanthan and the second gelling agent selected from a galactomannan and/or glucomannan. The combination of at least two gelling agents is present in amount of from 0.8 to 5 wt%, most preferred from 1 to 2.5 wt % based on the weight of the total moisture of the concentrate. Galactomannans useful in the invention are locust bean gum (LBG), tara gum, guar gum and cassia gum while useful glucomannans include konjac mannan gum. The ratio (w/w) between xanthan and the galactomannan and/or glucomannan is preferably from 90:10 to 10:90, more preferably from 80:20 to 20:80, even more preferably from 70:30 to 30:70, even more preferably from 60:40 to 40:60. Preferably, there is more of xanthan than the galactomannan and/or glucomannan. Preferably, the combination comprises xanthan and LBG. When xanthan and LBG are used, the optimal gel strength is usually obtainable using a ratio (w/w) of 50:50. The concentrate according to the invention is primarily based on the gelling agents described, however, minor amounts of other gums or starches may be added.

### Salt

The concentrate will contain NaCl and/or KCI to add savoury taste to the end product. Sodium and potassium may also be added as part of other ingredients. The concentrate has a combined sodium and potassium content of at least 70 mmol per 100g, preferably at least 100mmol per 100g, more preferably at least 150 mmol per 100g and preferably at most 800 mmol per 100g, more preferably at most 650 mmol per 100 g and even more preferably at most 500 mmol per 100 g of concentrate. Preferably, there is more sodium present than potassium. Thus, it is preferred that the molar ratio of sodium to potassium in the combined sodium and potassium content, at least 70:30, preferably at least 85:15, more preferably at least 95:5 and preferably at most 99.999 :0.001, more preferably at most 99.99:0.01.

The concentrate according to the invention preferably comprises at least 12 wt%. more preferably at least 15 wt% and preferably at most 40 wt%, preferably at most 35 wt%, more preferably at most 30 wt% of NaCl (based on the weight of the total moisture of the concentrate).

### Savoury taste booster ingredients

The concentrate according to the invention comprises at least an effective amount of savoury taste booster ingredients selected from the group consisting of glutamate, 5'-ribonucleotides, sucrose, glucose, fructose, lactic acid, citric acid and mixtures thereof. An effective amount is an amount effective to result in the desired taste of the end-product, i.e. after the dilution the concentrate is designed for. Preferably, the concentrate according to the invention comprises savoury taste booster ingredients in an amount of in an amount of at least 0.5 wt%, preferably at least 1 wt% more preferably at least 5 wt% and preferably at most 30 wt%, preferably at most 25 wt% most preferably at most 20 wt% by weight of the total concentrate.

A food concentrate in the form of a solid re-healed gel according to invention usually comprises
a) 45 to 70 wt% of water by weight of the total concentrate;
b) a combination of at least two gelling agents in an amount to form a gel, the first gelling agent being xanthan and the second gelling agent selected from a galactomannan and/or glucomannan, in amount of from 1 to 2.5 wt % based on the weight of the total water of the concentrate
c) a combined sodium and potassium content of at least 150 mmol per 100 g and preferably at most 500 mmol per 100g of concentrate;
d) 0 to 5 wt% of non-gelatinised starch by weight of the total concentrate;
e) An effective amount of savoury taste booster ingredients selected from the group consisting of glutamate, 5'-ribonucleotides, sucrose, glucose, fructose, lactic acid, citric acid and mixtures thereof, preferably in an amount of 0.5 to 30 wt% by weight of the total concentrate,

- whereby the concentrate has been sheared to form a solid re-healed gel said re-healed gel being defined as a continuous gel at 20°C having a weight of at least at least 10g, said solid re-healed gel having at most 70% and at least 10% of the gel strength of a quiescently formed gel of the same composition, whereby said gel strength measurements are performed after at least 4 days of storage at 20°C, whereby the gel strength is measured as set forth in the description;
- wherein the food concentrate has a gel strength of at least 15 g and preferably at most 500g, preferably at most 300g, most preferably at most 200g.

### Other ingredients

Other ingredients may be used depending on the end dish such as herbs, spices, vegetables, meat, fish, crustacean. Fat may also be used such as vegetable or animal fat. Fat for the purpose of the present invention include oils. If it is used, the fat is preferably present in emulsified form. Typical fats include fat from chicken, beef, and/or pork. Vegetable fats included palm fat, sunflower oil, olive oil, rape seed oil. The concentrate according to the invention may comprise fat in an amount of at least 0.1 wt%, preferably at least 0.5 wt%, more preferably at least 0.7 wt% and preferably at most 30 wt%, preferably at most 20 wt%, most preferably at most 15 wt% by weight of the total concentrate, preferably said fat having a melting point of at most 40°C.

A concentrate according to the invention may also further comprise glucose syrup and/or maltodextrin, in an amount of at least 1 wt%, preferably at least 3 wt% more preferably at least 5 wt% and preferably at most 30 wt%, preferably at most 20 wt% most preferably at most 10 wt% by weight of the total concentrate.

The concentrate according to the invention preferably does not contain non-gelatinised starch in an effective amount. In this context, an effective amount is an amount to cause thickening in the end product like a gravy. The concentrate according to the invention preferably contains at most 5 wt% preferably at most 3 wt%, more preferably at most 1 wt%, more preferably 0 wt% of a non-gelatinised starch by weight of the concentrate.

This list other ingredients is not exhaustive as a skilled person in this art will know which ingredients are useful these products. The amount will depend on the intended dilution and desired taste after dilution.

### Process to prepare a re-healed gel

The present invention also provides a process to prepare a concentrate according to the invention comprising the steps of
a) admixing ingredients to water to form a homogeneous mixture;
b) Heating said mixture to above the gel setting point, above 70°C preferably above 80°C under sufficient agitation to activate the gelling agents; optionally pasteurising the mixture;
c) A first gel formation phase comprising
   i) Cooling said mixture to below the gel setting point,
      preferably at a cooling rate of at least 0.1 °C/min and preferably at most 10 °C/min, more preferably at most 5 °C/min, more preferably at most 2 °C/min; and
   ii) Applying shear during the cooling phase below the gel setting point through a temperature range of at least 10°C preferably at least 15°C, more preferably at least 20°C; preferably the shear is applied in the range from 80°C to 40°C, more preferably in the temperature range from 60°C to 40°C;
d) filling containers with the sheared and cooled mixture and sealing the containers;
e) allowing the sheared and cooled mixture to form a solid re-healed gel during a second gel formation phase under quiescent conditions, preferably below 30°C;
whereby the shear applied during the first gel formation phase is such that during the second gel formation phase the mixture is capable of re-healing to form a solid re-healed gel according to the invention.

A first step of the inventive process comprises admixing the ingredients to water to form a homogeneous mixture. Most if not all of the ingredients of the concentrate may be mixed at this step. It may be preferred to make a premix of the dry ingredients before admixing these to water. The temperature of the water may be adjusted to a temperature suitable for dissolving the ingredients more efficiently. For example for xanthan and LBG, the temperature may be 50°C. All ingredients may be mixed with the water at once. It may be preferred to add salt after the gelling agent(s) have hydrated. It may be preferred to add fat - if any is used - in the second step. Preferably, the fat is in liquid form when added.

In a second step the mixture is heated under agitation to above the gel setting point, above 70°C, more preferably above 80°C. As known in the art in this heating step the gelling agents are hydrated. The gel setting point depends on the type of gelling agents and other ingredients. When the gel is formed by xanthan and LBG, the mixture is preferably heated above 80°C. The heating step may be used to pasteurise the mixture, preferably by keeping the mixture at 85°C for at least 1 min.

After heating the mixture with the ingredients, the inventive process comprises a step c) of the first gel formation phase by i) cooling said mixture to below the gel setting point, preferably at a cooling rate of at least 0.1 °C/min and preferably at most 10 °C/min, more preferably at most 5 °C/min, more preferably at most 2 °C/min. The cooling of the mixture may be carried out actively e.g. in a container with cooling means or passively. If the mixture is cooled actively it is preferably cooled by e.g water of more than 0°C to achieve a cooling rate of preferably at most 2 °C/min or even preferably at most 1°C/min during the first gel formation phase. Extreme cooling like with liquid nitrogen should be avoided as it would increase the risk of temperature inhomogeneity in the mixture. The cooling rate of the mixture and the shearing should be such to maintain an even temperature throughout the mixture to allow a controlled decrease in the temperature. The cooling rate can be controlled by for example adjusting the temperature and flow of the cooling medium with regard to the heat transfer rate in the mixture as well as the heat transfer between the mixture and cooling medium.

During the first gel formation phase shear is applied to the mixture whereby the shear applied is such that the mixture is capable of re-healing to form a solid re-healed gel under quiescent conditions during the second gel formation phase. The shear applied in the present invention is far less than used in the cited art to create liquid slurries of micro-gels. The shear applied is such that the formation of micro-gels is avoided as much as possible as - without wishing to be bound by theory - it is thought that micro-gels will not re-heal to form a continuous gel. The sheared mixture after the first gel formation phase preferably comprises no micro-gels or only a minor amount of micro-gels having a mean equivalent diameter of less than 200 micrometer (=microns) Here the mean equivalent diameter is the number weighted mean equivalent diameter of the micro-gels having an equivalent diameter in the range of 0.1 to 200 micrometer (=microns). A minor amount of said micro-gels is preferably less than 5 wt%, more preferably less than 2.5 wt%, most preferably less than 1wt% by weight of the total sheared mixture. The same applies to the re-healed gel according to the invention

The shear can be applied using one or more known means in the art. One common and preferred way is agitating the mixture in a container with stirring means. Other processes are known to apply shear such a passing fluid through a small aperture. The amount of shear can be controlled as known to the person of ordinary skill in the art. For example, the effect of the shear can be increased by increasing the shearing time, lowering the temperature and e.g. increasing the rpm of the stirrer or the pressure used to force the mixture through a nozzle. The effect of the shear can be decreased by doing the opposite.

Shear *is applied during the cooling phase below the gel setting point through a temperature range of at least 10°C preferably at least 15°C, more preferably at least* 20°C; *preferably the shear is applied when the mixture is cooled in the range from 80°C to 40°C, more preferably in the temperature range from 60°C to 40°C. Preferably the shear is applied through a temperature range of at least 20°C when the mixture is cooled from 60°C to 40°C, more preferably the shear is applied through a temperature range of 40°C when the mixture is cooled from 80°C to 40°C.*

The inventive process comprises a step of filling containers with the sheared and cooled mixture and sealing the containers before the second gel formation phase. Preferably, the step of cooling and applying shear is more or less directly followed by the filling step.

A subsequent step in the inventive process comprises a second gel formation phase under quiescent conditions preferably below 30°C, to allow the sheared and cooled mixture to form a solid re-healed gel according to the invention.

With lab equipment like the HotmixPRO^{™} Creative the following process may be used:
- Add water to the vessel and start heating
- Mix in a premix of the dry ingredients at shear level 3-4 at 50°C
- Activate the gelling agents at shear level min setting 4 and >80°C for 3 min (shear level to be adapted on viscosity to ensure sufficient agitation)
- If fat is used, addition of liquid fat (pre-melting of fat if necessary) shear level 4 (1min)
- Pasteurisation step at shear level 4 at 85°C for 1min
- Start cooling after pasteurization step, Cooling with temperature setting 30°C at shear level 2 with stirrer tool attached to knife to ensure sufficient shear agitation, resulting in a cooling rate of about 1°C-1,7°C/min depending on the recipe
- Samples filling at target temperature e.g. 40°C in appropriate containers and closed/sealed
- Samples stored at 20°C to form a gel under quiescent conditions.

These and other aspects, features and advantages will become apparent to those of ordinary skill in the art from a reading of the following detailed description and the appended claims. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages by weight of the total composition of the food concentrate unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated. Combinations of different endpoints are also intended for ranges described in the format at least (or more than) x1, preferably at least (or more than) x2, more preferably at least (or more than) x3 and preferably at most (or less than) y1, more preferably at most (or less than) y2, preferably at most (or less than) y3.

The invention is further illustrated by the following non-limiting examples.

### Examples

### Process

The concentrates according to the invention in Table 1 and 2 were prepared using pilot plant equipment Fryma Koruma MaxxD Lab with standard toothed rotor-stator of 4mm. The batch size was 15kg batch. During the whole preparation process the rotor-stator system was used with maximum shear of 3500 rpm together with the scraper constantly at 35 rpm. In step a) the dry ingredients were sucked-in via homogeniser (by applying a vacuum) and admixed to the water in the vessel to form a homogenous mixture.

In step b) the formed mixture was heated up to 85°C with 1 min pasteurisation under sufficiently high shear activate the gelling agents (at least 3 min 3500 rpm) (the whole heating step including the pasteurisation took approx.12 min). In a subsequent step c) (the first gel formation phase) the mixture was cooled and sheared. The first aspect (i) of step c) refers to the cooling of the mixture at a cooling rate of about 0.5-0.6 °C/min from 85°C to 40°C.The second aspect (ii) of step c refers to the application of shear during said cooling from 85°C to 40°C when a maximum shear of 2000 rpm was applied. During the first gel formation phase the shearing was controlled to maintain the cooling rate at about 0.5-0.6 °C/min. Cooling was carried out using the double jacketed system of the Fryma using water. The vacuum that was applied to suck in the dry ingredients was maintained during the rest of the process to reach an atmospheric pressure of about 600mbar to reduce air inclusion. The sheared mixture was filled at 40°C into tubs with about 28g of concentrate and sealed. After filling the sheared mixture was stored under quiescent conditions at 20°C and allowed to form a solid re-healed gel during a second gel formation phase. This could be for at least 24hrs.

The quiescent gels of example 1a and 1b and Example 2 were prepared as above except that the heating mixture of step b) was filled into tubs and sealed at 85°C.The filled containers were left undisturbed at 20°C to form quiescent gel. The measurements were performed afer at least 4 days of storage at 20°C. The gel strength measurements were carried out in a slightly tapered oval tubs of PP/EVOH/PP (about 700micron thickness) having the following inner dimensions: long axis of about 5 cm (top), short axis 3.7 cm (top), height of 2.2 cm, long axis of about 4.6 cm (bottom), short axis 3.2 cm (bottom),

### Example 1

| Ingredient | 1a (Comp) | 1b (Comp) | 1c (Invention) |
|---|---|---|---|
| Used gel system | X/LBG 60:40 | X/LBG 60:40 | X/LBG 60:40 |
| Description | wt% | wt% | wt% |
| Drinking water | 67,34 | 66,60 | 66,60 |
| NaCl | 22,54 | 22,35 | 22,35 |
| Sugar | 3,40 | 3,40 | 3,40 |
| Yeast Extract Powder | 2,00 | 2,00 | 2,00 |
| Caramel | 0,20 | 0,20 | 0,20 |
| Onion Flavouring | 0,50 | 0,50 | 0,50 |
| Chicken flavour | 1,00 | 1,00 | 1,00 |
| Mono-sodium glutamate | 2,00 | 2,00 | 2,00 |
| Inosinate/Guanylae IG | 0,20 | 0,20 | 0,20 |
| Xanthan gum | 0,49 | 1,05 | 1,05 |
| Locust bean gum | 0,33 | 0,70 | 0,70 |
| Total | 100 | 100 | 100 |
| | | | |
| Gelling agents (wt%(aq)) | 1,2 | 2,5 | 2,5 |
| Xanthan (wt%(aq)) | 0,7 | 1,5 | 1,5 |
| Galactomannan (wt%(aq)) | 0,5 | 1,0 | 1,0 |
| | | | |
| NaCl (wt%(aq)) | 25,0 | 25,1 | 25,1 |
| combined sodium and potassium content (mmol per 100 g concentrate) | 402.7 | 399.8 | 399.8 |
| Na+ to K+ molar ratio | 99.3:0.7 | 99.3:0.7 | 99.3:0.7 |
| Total water content% | 67,7 | 67,1 | 67,1 |
| | | | |
| **Ease of portioning** | **-/+** | **-**- | **++** |
| **Coating behaviour** | **+** | **+++** | **+++** |

Examples 1a, 1b (both comparative Q gels) and 1c (invention) were compared with respect to ease of portioning and coating behaviour. Ease of portioning refers to the ease of scooping only one part of the gel out of the tub. The coating test measures the coating behaviour of the concentrate after dilution such as would be experienced by a consumer after a 1 to 10 dilution (28g conc/280 hot boiling water) followed by cooling from 75°C to 20°C at 2°C/min. The coating effect is apparent as a sudden increase in viscosity around 50°C. While the comparative Q-gel of example 1 a showed coating effect of 6mPa.s, the re-healed gel of example 1c showed a coating effect of more than 12mPa.s. (Coating test: Anton Paar MCR102 SN81140794; FW3.65; Slot(3,-1); Adj(80,0)d; shear rate of 30 1/s; Application: RHEOPLUS/32 V3.61 21006151-33024, Measuring system:CC27-SN28453; d=0 mm; additional equipment:
TU1=C-PTD200-SN81342549. Section 1: 5 measuring points, 30s, d(gamma)/dt= 30 1/s, T[-1] = 75 °C; Section 2: 55 measuring points, 30s, d(gamma)/dt= 30 1/s, T[-1] = 75-20 °C; Section 3: 5 measuring points, 30s, d(gamma)/dt= 30 1/s, T[-1]= 20 °C

The decrease in gel strength of example 1 c, a re-healed gel according to the invention was almost 90% compared to the quiescently formed gel of the same composition 1b), measured as described herein.

### Example 2 Preparation of re-healed gels according to the invention at various levels of xanthan and galactomannan/glucomannan

| **Ingredient*** | **2a** | **2b** | **2c** | **2d** |
|---|---|---|---|---|
| Used gel system | X/LBG 30:70 | X/Tara 40:60 | X/Konjac 70:30 | X/Guar 50:50 |
| Gelling agents (wt%(aq)) | 0,8% | 1,5% | 2,4% | 4,5% |
| Xanthan (wt%(aq)) | 0.2% | 0,6% | 1,7% | 2,3% |
| Galactomannan (wt%(aq)) | 0.6% | 0.9% | - | 2,3% |
| Glucomannan (wt%(aq)) | - | - | 0,7% | - |
| NaCl (wt%(aq)) | 25% | 22% | 16% | 12% |
| combined sodium and potassium content (mmol per 100 g concentrate) | 401.6 | 348.7 | 238.7 | 172.7 |
| Na+ to K+ molar ratio | 99.3:0.7 | 99.2:0.8 | 98.9:1.1 | 98.4:1.6 |
| Sugar | 3.4 | 5 | 15 | 20 |
| Yeast Extract Powder | 2 | 2 | 2 | 2 |
| Caramel | 0.2 | 0.2 | 0.2 | 0.2 |
| Onion Flavour | 0.5 | 0.5 | 0.5 | 0.5 |
| Chicken flavour | 1 | 1 | 1 | 1 |
| Mono sodium glutamate | 2 | 5 | 5 | 5 |
| Inosinate/Guanylate IG | 0.2 | 0.3 | 0.3 | 0.3 |
| Water | 68% | 67% | 63% | 61% |
| | | | | |
| **Ease of portioning** | **+++** | **+++** | **+++** | **+++** |
| **Decrease (%) in gel strength** of **the re-healed gel compared to Q gel of the same composition** | **82%** | **84%** | **74%** | **77%** |

| | | | | |
|---|---|---|---|---|
| *Ingredients are in wt% by weight of the total composition except for salt and the gelling agents which are in wt%(aq), the latter denoting the wt% by weight of the total amount of water in the composition | | | | |

## Claims

1. A food concentrate in the form of a solid re-healed gel comprising
a) 45 to 70 wt% of water by weight of the total concentrate;
b) the combination of at least two gelling agents in an amount to form a gel, the first gelling agent being xanthan and the second gelling agent selected from a galactomannan and/or glucomannan in amount of from 0.8 to 5 wt%, most preferred from 1 to 2.5 wt % based on the weight of the total water of the concentrate;
c) a combined sodium and potassium content of at least 70 mmol per 100 g and preferably at most 800 mmol per 100g of concentrate;
d) 0 to 5 wt% of non-gelatinised starch by weight of the total concentrate;
e) An effective amount of savoury taste booster ingredients selected from the group consisting of glutamate, 5'-ribonucleotides, sucrose, glucose, fructose, lactic acid, citric acid and mixtures thereof, preferably in an amount of 0.5 to 30 wt% by weight of the total concentrate,
whereby the concentrate has been sheared to form a solid re-healed gel said re-healed gel being defined as a continuous gel at 20°C having a weight of at least 1g, preferably at least 10g, said solid re-healed gel having at most 90%, preferably at most 80%, preferably at most 70%, preferably at most 60%, and preferably at least 5%, more preferably at least 10% of the gel strength of a quiescently formed gel of the same composition, whereby said gel strength measurements are performed after at least 4 days of storage at 20°C, whereby the gel strength is measured as set forth in the description.

2. A food concentrate according to claim 1 having a gel strength of at least 5g, preferably at least 10g, more preferably at least 15 g and preferably at most 500g, preferably at most 300g, most preferably at most 200g.

3. A food concentrate according to any one of the preceding claims wherein the combination of the at least two gelling agents comprises 1.0%- 2.5% of the combination of xanthan and locust bean gum.

4. A food concentrate according to any one of the preceding claims further comprising emulsified fat, preferably in an amount of 0.1 to 30 wt% by weight of the total concentrate, preferably said fat having a melting point of at most 40°C.

5. A food concentrate according to any one of the preceding claims further comprising 1 to 30 wt% of glucose syrup and/or maltodextrin, by weight of the total concentrate.

6. A food concentrate according to any one of the preceding claims wherein the combined sodium and potassium content is at least 100mmol per 100g, preferably at least 150 mmol per 100g of concentrate and preferably at most 650 mmol per 100 g and more preferably at most 500 mmol per 100 g of concentrate.

7. A food concentrate according to any one of the preceding claims wherein the concentrate has been sheared during the cooling phase below the gel setting point through a temperature range of at least 10°C, preferably at least 15°C, more preferably at least 20°C.

8. A food concentrate according to any one of the preceding claims wherein the concentrate has been sheared in the range from 80°C to 40°C, more preferably in the temperature range from 60°C to 40°C.

9. A food concentrate in the form of a solid re-healed gel according to claim 1 comprising
a) 45 to 70 wt% of water by weight of the total concentrate;
b) a combination of at least two gelling agents in an amount to form a gel, the first gelling agent being xanthan and the second gelling agent selected from a galactomannan and/or glucomannan, in amount of from 1 to 2.5 wt % based on the weight of the total water of the concentrate
c) a combined sodium and potassium content of at least 150 mmol per 100 g and preferably at most 500 mmol per 100g of concentrate;
d) 0 to 5 wt% of non-gelatinised starch by weight of the total concentrate;
e) An effective amount of savoury taste booster ingredients selected from the group consisting of glutamate, 5'-ribonucleotides, sucrose, glucose, fructose, lactic acid, citric acid and mixtures thereof, preferably in an amount of 0.5 to 30 wt% by weight of the total concentrate,
- whereby the concentrate has been sheared to form a solid re-healed gel said re-healed gel being defined as a continuous gel at 20°C having a weight of at least at least 10g, said solid re-healed gel having at most 70% and at least 10% of the gel strength of a quiescently formed gel of the same composition;
- wherein the food concentrate has a gel strength of at least 15 g and preferably at most 500g, preferably at most 300g, most preferably at most 200g.

10. A process to prepare a food concentrate according to any one of the preceding claims comprising the steps of
a) Admixing ingredients to water to form a homogeneous mixture;
b) Heating said mixture under agitation to above the gel setting point, preferably above 70 °C, preferably above 80°C;
optionally, pasteurising the mixture;
c) A first gel formation phase comprising
i) Cooling said mixture to below the gel setting point; and
ii) Applying shear during the cooling phase below the gel setting point through a temperature range of at least 10°C, preferably at least 15°C, more preferably at least 20°C;
d) Filling containers with sheared and cooled mixture and sealing the containers;
e) allowing the sheared and cooled mixture to form a solid re-healed gel during a second gel formation phase under quiescent conditions, preferably below 30°C;
whereby the shear applied during the first gel formation phase is such that during the second gel formation phase the mixture is capable of re-healing to form a solid re-healed gel according to any one of the preceding claims.

11. A process to prepare a food concentrate according to claim 10 whereby at step c)i the cooling is carried out with a cooling rate of at least 0.1 °C/min and preferably at most 10 °C/min, more preferably at most 5 °C/min, more preferably at most 2 °C/min.

12. A process to prepare a food concentrate according to claim 10 whereby at step c)ii the shear is applied in the range from 80°C to 40°C, more preferably in the temperature range from 60°C to 40°C.

## Patentansprüche

1. Lebensmittelkonzentrat in Form eines festen, wiedererhärteten Gels, umfassend
a) 45 bis 70 Gew.-% Wasser, bezogen auf das Gewicht des gesamten Konzentrats;
b) die Kombination von mindestens zwei Geliermitteln in einer Menge, um ein Gel zu bilden, wobei das erste Geliermittel Xanthan ist und das zweite Geliermittel unter Galactomannan und/oder Glucomannan in einer Menge von 0,8 bis 5 Gew.-%, höchst bevorzugt von 1 bis 2,5 Gew.-%, bezogen auf das Gewicht des gesamten Wassers des Konzentrats, ausgewählt ist;
c) einen kombinierten Natrium- und Kaliumgehalt von mindestens 70 mmol pro 100 g und vorzugsweise von höchstens 800 mmol pro 100 g Konzentrat;
d) 0 bis 5 Gew.-% nicht gelatinierte Stärke, bezogen auf das Gewicht des gesamten Konzentrats;
e) eine wirksame Menge an herzhaften Geschmacksverstärkerzutaten, ausgewählt aus der Gruppe, bestehend aus Glutamat, 5'-Ribonukleotiden, Saccharose, Glucose, Fructose, Milchsäure, Zitronensäure und Mischungen davon, vorzugsweise in einer Menge von 0,5 bis 30 Gew.-%, bezogen auf Gewicht des gesamten Konzentrats;
wobei das Konzentrat geschert wurde, um ein festes, wiedererhärtetes Gel zu bilden, wobei das wiedererhärtete Gel als ein kontinuierliches Gel bei 20°C mit einem Gewicht von mindestens 1 g, vorzugsweise von mindestens 10 g, definiert ist, wobei das feste, wiedererhärtete Gel höchstens 90%, vorzugsweise höchstens 80%, vorzugsweise höchstens 70%, vorzugsweise höchstens 60% und vorzugsweise mindestens 5%, bevorzugter mindestens 10% der Gelstärke eines ruhend gebildeten Gels derselben Zusammensetzung aufweist, wobei die Gelstärkemessungen nach mindestens 4 Tagen Lagerung bei 20°C durchgeführt werden, wobei die Gelstärke nach den Angaben der Beschreibung gemessen wird.

2. Lebensmittelkonzentrat nach Anspruch 1 mit einer Gelstärke von mindestens 5 g, vorzugsweise von mindestens 10 g, bevorzugter von mindestens 15 g und vorzugsweise höchstens 500 g, vorzugsweise höchstens 300 g, bevorzugter höchstens 200 g.

3. Lebensmittelkonzentrat nach irgendeinem der vorhergehenden Ansprüche, wobei die Kombination der mindestens zwei Geliermittel 1,0% bis 2,5% der Kombination aus Xanthan und Johannisbrotkernmehl umfasst.

4. Lebensmittelkonzentrat nach irgendeinem der vorhergehenden Ansprüche, das ferner emulgiertes Fett umfasst, vorzugsweise in einer Menge von 0,1 bis 30 Gew.-% des gesamten Konzentrats, wobei das Fett vorzugsweise einen Schmelzpunkt von höchstens 40°C aufweist.

5. Lebensmittelkonzentrat nach irgendeinem der vorhergehenden Ansprüche, das ferner 1 bis 30 Gew.-% Glucosesirup und/oder Maltodextrin, bezogen auf das Gewicht des gesamten Konzentrats, umfasst.

6. Lebensmittelkonzentrat nach irgendeinem der vorhergehenden Ansprüche, wobei der kombinierte Natrium- und Kaliumgehalt mindestens 100 mmol pro 100 g, vorzugsweise mindestens 150 mmol pro 100 g Konzentrat und vorzugsweise höchstens 650 mmol pro 100 g und bevorzugter höchstens 500 mmol pro 100 g Konzentrat beträgt.

7. Lebensmittelkonzentrat nach irgendeinem der vorhergehenden Ansprüche, wobei das Konzentrat während der Abkühlphase unterhalb des Gelierpunkts über einen Temperaturbereich von mindestens 10°C, vorzugsweise von mindestens 15°C, bevorzugter von mindestens 20°C, geschert wurde.

8. Lebensmittelkonzentrat nach irgendeinem der vorhergehenden Ansprüche, wobei das Konzentrat in dem Bereich von 80°C bis 40°C, bevorzugter im Temperaturbereich von 60°C bis 40°C, geschert wurde.

9. Lebensmittelkonzentrat in Form eines festen, wiedererhärteten Gels nach Anspruch 1, umfassend
a) 45 bis 70 Gew.-% Wasser, bezogen auf das Gewicht des gesamten Konzentrats;
b) eine Kombination aus mindestens zwei Geliermitteln in einer Menge, um ein Gel zu bilden, wobei das erste Geliermittel Xanthan ist und das zweite Geliermittel unter Galactomannan und/oder Glucomannan in einer Menge von 1 bis 2,5 Gew.-%, bezogen auf das Gewicht des gesamten Wassers des Konzentrats, ausgewählt ist;
c) einen kombinierten Natrium- und Kaliumgehalt von mindestens 150 mmol pro 100 g und vorzugsweise von höchstens 500 mmol pro 100 g des Konzentrats;
d) 0 bis 5 Gew.-% nicht gelatinierte Stärke, bezogen auf das Gewicht des gesamten Konzentrats;
e) eine wirksame Menge an herzhaften Geschmacksverstärkerzutaten, ausgewählt aus der Gruppe, bestehend aus Glutamat, 5'-Ribonukleotiden, Saccharose, Glucose, Fructose, Milchsäure, Zitronensäure und Mischungen davon, vorzugsweise in einer Menge von 0,5 bis 30 Gew.-%, bezogen auf das Gewicht des gesamten Konzentrats,
- wobei das Konzentrat geschert wurde, um ein festes, wiedererhärtetes Gel zu bilden, wobei das wiedererhärtete Gel als ein kontinuierliches Gel bei 20°C mit einem Gewicht von mindestens 10 g definiert ist, wobei das feste, wiedererhärtete Gel höchstens 70% und mindestens 10% der Gelstärke eines ruhend gebildeten Gels derselben Zusammensetzung aufweist;
- wobei das Lebensmittelkonzentrat eine Gelstärke von mindestens 15 g und vorzugsweise von höchstens 500 g, vorzugsweise von höchstens 300 g, höchst bevorzugt von 200 g, aufweist.

10. Verfahren zur Herstellung eines Lebensmittelkonzentrats nach irgendeinem der vorhergehenden Ansprüche, umfassend die Schritte
a) Einmischen der Zutaten in Wasser, um eine homogene Mischung zu bilden;
b) Erhitzen der Mischung unter Rühren über den Gelierpunkt, vorzugsweise über 70°C, vorzugsweise über 80°C;
optional Pasteurisieren der Mischung;
c) einer ersten Gelbildungsphase, umfassend
i) Abkühlen der Mischung unter den Gelierpunkt; und
ii) Ausüben einer Scherung während der Abkühlphase unter den Gelierpunkt über einen Temperaturbereich von mindestens 10°C, vorzugsweise von mindestens 15°C, bevorzugter von mindestens 20°C;
d) Befüllen von Behältern mit der gescherten und gekühlten Mischung und Verschließen der Behälter;
e) Aushärtenlassen der gescherten und gekühlten Mischung, um unter ruhenden Bedingungen ein festes, wiedererhärtetes Gel während einer zweiten Gelbildungsphase, vorzugsweise unter 30°C, zu bilden;
wobei die während der ersten Gelbildungsphase ausgeübte Scherung derartig ist, dass die Mischung während der zweiten Gelbildungsphase in der Lage ist, wieder zu erhärten, um ein festes, wiedererhärtetes Gel nach irgendeinem der vorhergehenden Ansprüche zu bilden.

11. Verfahren zur Herstellung eines Lebensmittelkonzentrats nach Anspruch 10, wobei das Abkühlen im Schritt c) mit einer Abkühlgeschwindigkeit von mindestens 0,1°C/min und vorzugsweise von höchstens 10°C/min, bevorzugter von höchstens 5°C/min, bevorzugter von höchstens 2°C/min, durchgeführt wird.

12. Verfahren zur Herstellung eines Lebensmittelkonzentrats nach Anspruch 10, wobei die Scherung im Schritt c) im Temperaturbereich von 80°C bis 40°C, bevorzugter von 60°C bis 40°C, ausgeübt wird.

## Revendications

1. Concentré alimentaire sous la forme d'un gel régénéré solide comprenant
a) 45 à 70 % en poids d'eau par rapport au poids du concentré total ;
b) la combinaison d'au moins deux agents gélifiants en une quantité formant un gel, le premier agent gélifiant étant le xanthane et le deuxième agent gélifiant étant choisi parmi un galactomannane et/ou un glucomannane en une quantité de 0,8 à 5 % en poids, tout spécialement de 1 à 2,5 % en poids par rapport au poids de l'eau totale du concentré ;
c) une teneur combinée en sodium et en potassium d'au moins 70 mmol pour 100 g et de préférence d'au plus 800 mmol pour 100 g de concentré ;
d) 0 à 5 % en poids d'amidon non gélatinisé par rapport au poids du concentré total ;
e) une quantité efficace d'ingrédients rehausseurs de goût umami choisis dans le groupe constitué par le glutamate, les 5'-ribonucléotides, le saccharose, le glucose, le fructose, l'acide lactique, l'acide citrique et leurs mélanges, de préférence en une quantité de 0,5 à 30 % en poids du concentré total,
moyennant quoi le concentré a été cisaillé pour former un gel régénéré solide, ledit gel régénéré étant défini comme un gel continu à 20°C ayant un poids d'au moins 1 g, de préférence d'au moins 10 g, ledit gel régénéré solide ayant au plus 90 %, de préférence au plus 80 %, de préférence au plus 70 %, de préférence au plus 60 %, et de préférence au moins 5 %, mieux encore au moins 10 % de la résistance de gel d'un gel formé au repos ayant la même composition, moyennant quoi lesdites mesures de résistance de gel sont effectuées après au moins 4 jours de stockage à 20°C, moyennant quoi la résistance de gel est mesurée comme indiqué dans la description.

2. Concentré alimentaire selon la revendication 1, ayant une résistance de gel d'au moins 5 g, de préférence d'au moins 10 g, mieux encore d'au moins 15 g et de préférence d'au plus 500 g, de préférence d'au plus 300 g, tout spécialement d'au plus 200 g.

3. Concentré alimentaire selon l'une quelconque des revendications précédentes, dans lequel la combinaison des au moins deux agents gélifiants comprend 1,0 % à 2,5 %, par rapport à la combinaison, de xanthane et de gomme de caroube.

4. Concentré alimentaire selon l'une quelconque des revendications précédentes, comprenant en outre une matière grasse émulsifiée, de préférence en une quantité de 0,1 à 30 % en poids par rapport au poids du concentré total, de préférence ladite matière grasse ayant un point de fusion d'au plus 40°C.

5. Concentré alimentaire selon l'une quelconque des revendications précédentes, comprenant en outre 1 à 30 % en poids de sirop de glucose et/ou de maltodextrine, par rapport au poids du concentré total.

6. Concentré alimentaire selon l'une quelconque des revendications précédentes, dans lequel la teneur combinée en sodium et en potassium est d'au moins 100 mmol pour 100 g, de préférence d'au moins 150 mmol pour 100 g de concentré et de préférence d'au plus 650 mmol pour 100 g et mieux encore d'au plus 500 mmol pour 100 g de concentré.

7. Concentré alimentaire selon l'une quelconque des revendications précédentes, lequel concentré a été cisaillé pendant la phase de refroidissement en-deçà du point de gélification sur une plage de température d'au moins 10°C, de préférence d'au moins 15°C, mieux encore d'au moins 20°C.

8. Concentré alimentaire selon l'une quelconque des revendications précédentes, lequel concentré a été cisaillé dans la plage allant de 80°C à 40°C, mieux encore dans la plage de température allant de 60°C à 40°C.

9. Concentré alimentaire sous la forme d'un gel régénéré solide selon la revendication 1, comprenant
a) 45 à 70 % en poids d'eau par rapport au poids du concentré total ;
b) une combinaison d'au moins deux agents gélifiants en une quantité formant un gel, le premier agent gélifiant étant le xanthane et le deuxième agent gélifiant étant choisi parmi un galactomannane et/ou un glucomannane en une quantité de 1 à 2,5 % en poids par rapport au poids de l'eau totale du concentré ;
c) une teneur combinée en sodium et en potassium d'au moins 150 mmol pour 100 g et de préférence d'au plus 500 mmol pour 100 g de concentré ;
d) 0 à 5 % en poids en poids d'amidon non gélatinisé par rapport au poids du concentré total ;
e) une quantité efficace d'ingrédients rehausseurs de goût umami choisis dans le groupe constitué par le glutamate, les 5'-ribonucléotides, le saccharose, le glucose, le fructose, l'acide lactique, l'acide citrique et leurs mélanges, de préférence en une quantité de 0,5 à 30 % en poids du concentré total,
- moyennant quoi le concentré a été cisaillé pour former un gel régénéré solide, ledit gel régénéré étant défini comme étant un gel continu à 20°C ayant un poids d'au moins 10 g, ledit gel régénéré solide ayant au plus 70 % et au moins 10 % de la résistance de gel d'un gel formé au repos ayant la même composition,
- lequel concentré alimentaire a une résistance de gel d'au moins 15 g et de préférence d'au plus 500 g, de préférence d'au plus 300 g, tout spécialement d'au plus 200 g.

10. Procédé pour préparer un concentré alimentaire de l'une quelconque des revendications précédentes, comprenant les étapes suivantes :
a) des ingrédients sont mélangés à de l'eau pour former un mélange homogène ;
b) ledit mélange est chauffé sous agitation au-delà du point de gélification, de préférence au-delà de 70°C, de préférence au-delà de 80°C ;
éventuellement le mélange est pasteurisé ;
c) une première phase de formation de gel comprenant
i) le refroidissement dudit mélange en-deçà du point de gélification ; et
ii) l'application d'un cisaillement pendant la phase de refroidissement en-deçà du point de gélification sur une plage de température d'au moins 10°C, de préférence d'au moins 15°C, mieux encore d'au moins 20°C ;
d) des récipients sont remplis avec le mélange cisaillé et refroidi et les récipients sont scellés ;
e) le mélange cisaillé et refroidi est laissé à former un gel régénéré solide pendant une deuxième phase de formation de gel dans des conditions au repos, de préférence à moins de 30°C ;
moyennant quoi le cisaillement appliqué pendant la première phase de formation de gel est tel que, pendant la deuxième phase de formation de gel, le mélange soit capable de se régénérer pour former un gel régénéré solide de l'une quelconque des revendications précédentes.

11. Procédé pour préparer un concentré alimentaire selon la revendication 10, dans lequel, dans l'étape c)i), le refroidissement est mis en œuvre à une vitesse de refroidissement d'au moins 0,1°C/min et de préférence d'au plus 10°C/min, mieux encore d'au plus 5°C/min, plus particulièrement d'au plus 2°C/min.

12. Procédé pour préparer un concentré alimentaire selon la revendication 10, dans lequel, dans l'étape c)ii), le cisaillement est appliqué dans la plage allant de 80°C à 40°C, mieux encore dans la plage de température allant de 60°C à 40°C.
